# DEMANDE DE BREVET EUROPEEN

(11) **EP 0 999 237 A1**
(43) Date de publication de la demande: **10.05.2000**
(21) Numéro de dépôt: 99402689.6
(22) Date de dépôt: 28.10.1999
(51) Int. Cl.: C08L 95/00, C08K 5/101

(54) **Procédé pour préparer un enrobé bitumineux répandable à froid**

(30) Priorité: 05.11.1998 FR 9813930
(71) Demandeur: GERLAND S.A., F-69625 Villeurbanne Cédex (FR)
(72) Inventeur: Antoine, Jean-Pierre, 69340 Francheville (FR); Pasquier, Michel, 69960 Corbas (FR)
(74) Mandataire: Rousset, Jean-Claude

(57) **Abrégé**

L'enrobé est préparé à froid en malaxant les granulats avec un monoester méthylique dérivé d'une huile végétale et un bitume dur en poudre qui se dissout dans l'ester en formant un enrobage de liant bitumineux.

L'enrobé est préparé et répandu à froid, sans utilisation d'eau ni d'additif nuisible à l'environnement. On évite donc les inconvénients économiques et écologiques des enrobés à chaud et des enrobés à froid utilisant des liants en émulsion aqueuse.

## Description

L'invention concerne les enrobés bitumineux utilisés notamment dans la construction des routes.

Les techniques routières bitumineuses actuelles reposent sur deux grandes filières. Dans la filière chaude, le liant bitumineux est mis en contact avec des granulats à des températures élevées (enrobage à chaud et répandage de liants anhydres). La filière froide a recours aux émulsions de liants bitumineux mises en contact avec des granulats à température ambiante (enrobage à froid et répandage).

Ces deux grandes filières permettent de répondre à tous les cas de figure qui peuvent se rencontrer pour réaliser des chantiers mais présentent des inconvénients notamment sur le plan du respect de l'environnement.

Les deux filières reposent en fait sur le même concept: disposer d'une forme fluide de bitume afin de pouvoir établir avec les granulats une bonne liaison et retrouver par la suite une consistance suffisante pour obtenir des performances mécaniques et rhéologiques compatibles avec les caractéristiques d'usage de la chaussée.

Plusieurs procédés permettent d'obtenir cette forme fluide du bitume ou du liant bitumineux: le chauffage, la mise en émulsion aqueuse et le fluxage ou fluidification apporté par une coupe pétrolière ou carbochimique.

Le chauffage consiste à porter un liant bitumineux à température élevée (environ 150 °C) et à le mélanger avec des granulats préalablement chauffés à la même température afin d'obtenir un enrobé homogène et fluide qui sera facilement répandable et compactable sur la chaussée tant que la température restera suffisamment élevée.

La mise en émulsion permet de disposer d'une forme fluide de bitume à température ambiante dans un état métastable. Le contact avec les granulats permet de déplacer un équilibre chimique pour aboutir à la rupture de l'émulsion. Le bitume se rassemble à la surface des granulats et l'eau est drainée à l'extérieur du mélange.

Le fluxage ou fluidification est obtenu en mélangeant au bitume une coupe pétrolière ou carbochimique en vue de réduire fortement la viscosité du mélange et de permettre un bon mouillage ou un bon mélange des granulats avec celui-ci. Le fluxant s'évaporant par la suite la consistance augmente alors.

L'enrobage à chaud nécessite une installation importante apte à maintenir chaud le bitume et à sécher et chauffer les granulats. Ceci implique nécessairement une importante consommation de combustible et un rejet de CO₂.

La mise en émulsion se fait en usine grâce à un moulin colloïdal en mélangeant le liant bitumineux chaud et une phase aqueuse contenant un agent tensioactif. Ceci implique nécessairement le transport de l'eau (constituant non fonctionnel de l'émulsion) et le relargage éventuel de l'agent tensioactif dans l'environnement lors de la rupture de l'émulsion.

Le fluxage s'effectue par mélange à chaud du liant bitumineux et du fluxant. Le fluxant s'évapore par la suite dans l'atmosphère contribuant à l'effet de serre et à l'appauvrissement des ressources fossiles. Il nécessite une attention particulière en termes de sécurité (point éclair très bas: 50 à 80 °C) et de toxicité éventuelle.

Des techniques intermédiaires ont aussi été développées (fluxage et chauffage) et permettent de réaliser des enrobés à des températures intermédiaires (environ 100 °C)

Il a été envisagé de remplacer tout ou partie des fluxants classiques par des monoesters d'acides gras et notamment des esters méthyliques d'huiles végétales telles que celles de tournesol, de colza et de lin. Cette option vise à mieux prendre en compte les préoccupations en matière de sécurité, de toxicologie et d'écotoxicologie cités plus haut pour les techniques ayant recours au fluxage.

L'invention propose d'utiliser ces mêmes composés pour réaliser un enrobage strictement à froid sans avoir recours à l'émulsion.

L'invention vise donc un procédé à froid pour préparer un enrobé propre à être répandu à froid, comprenant des granulats dont chaque particule est recouverte d'un enrobage de liant bitumineux

Dans le procédé selon l'invention, on malaxe ensemble les granulats, un solvant à base d'au moins un monoester d'acide gras propre à se transformer chimiquement au contact de l'air avec augmentation de viscosité, et un bitume dur en poudre, le bitume se dissolvant dans le solvant pour former ledit enrobage.

Le terme monoester désigne des esters dont la molécule contient un seul groupe -CO-O-, par opposition notamment aux triglycérides constitutifs des corps gras, qui sont des triesters d'acides gras.

Les monoesters d'acides gras, et plus particulièrement les esters méthyliques dérivés d'huiles végétales, s'avèrent être de très bons solvants du bitume. De plus ils possèdent la particularité de pouvoir réticuler en présence de l'oxygène pourvu que l'indice d'iode soit suffisamment élevé. On peut donc envisager l'emploi de ces esters comme solvants réactifs.

Les monoesters d'acides gras ne sont ni toxiques ni nuisibles à l'environnement et possèdent un point éclair de l'ordre de 200 °C, au lieu de 50 à 85 °C environ pour les fluidifiants ou fluxants pétroliers ou carbochimiques. Ils peuvent être obtenus par transestérification à partir d'huiles végétales qui sont des produits renouvelables, de sorte que leur utilisation ne contribue pas à l'augmentation du CO₂ atmosphérique et à l'effet de serre. Au contraire, l'incorporation dans la route de produits dérivés des plantes, qui consomment du gaz carbonique pour la synthèse chlorophyllienne, contribue à la diminution de celui-ci.

Les huiles végétales sont issues de la trituration de différentes sortes de graines. Chimiquement elles se présentent sous la forme de triglycérides, c'est-à-dire de triesters résultant de la condensation de trois molécules d'acide gras et d'une molécule de glycérol. Les acides gras peuvent comporter des doubles liaisons carbone-carbone en nombre variable selon la plante dont provient l'huile. Les acides gras et les esters correspondants possèdent un pouvoir réducteur qui est fonction du nombre de doubles liaisons et de la proximité de celles-ci dans la chaîne hydrocarbonée. Ce pouvoir réducteur est mesuré par l'indice d'iode, et se manifeste par une polymérisation sous l'action de l'oxygène, qui entraîne un épaississement et un durcissement. Ce phénomène est connu sous le nom de siccativation.

Les esters méthyliques résultant de la transestérification des huiles végétales au moyen de l'alcool méthylique sont des produits connus, qui ont été développés initialement en tant que substituts du gazole.

Les monoesters utilisés dans l'invention peuvent également être obtenus à partir d'huiles animales, ou d'autres sources.

Quant au bitume, pour pouvoir se disperser uniformément dans le solvant, il doit être à l'état de poudre fine. Seuls les bitumes dits "durs", non collants, peuvent être maintenus à l'état de poudre, sans s'agglomérer. Conviennent notamment à cet égard les bitumes durs naturels du type asphaltite, et les bitumes durs de désasphaltage, c'est-à-dire les résidus des traitements de désasphaltage effectués dans les raffineries pour alléger les produits pétroliers.

Dans la suite, sauf indication contraire, le terme "ester" désigne les monoesters d'acides gras utilisés dans l'invention, et le terme "liant" désigne le liant bitumineux obtenu à partir de ceux-ci.

Les trois constituants essentiels de l'enrobé que sont les granulats, l'ester et le bitume peuvent être introduits simultanément ou de manière séquentielle. On peut par exemple dissoudre le bitume dans l'ester et enrober les granulats par le liant obtenu, ou mouiller d'abord les granulats à l'aide de l'ester et ajouter ensuite le bitume.

Des caractéristiques optionnelles de l'invention, complémentaires ou alternatives, sont énoncées ci-après:
- Le solvant est constitué exclusivement par un ou plusieurs monoesters d'acides gras.
- Le solvant comprend au moins un monoester d'un acide gras et d'un alcool comportant au plus 4 atomes de carbone.
- Le solvant comprend au moins un monoester méthylique d'acide gras.
- Le solvant comprend un mélange de monoesters d'acides gras obtenu par transestérification d'une huile animale ou végétale.
- Ledit ou lesdits monoesters, ou ladite huile, possèdent un indice d'iode supérieur ou égal à 120.
- Le solvant contient en outre au moins un catalyseur de la polymérisation du monoester sous l'action de l'oxygène.
- Le bitume dur est choisi parmi un bitume naturel du type asphaltite et un bitume de désasphaltage.
- Le rapport pondéral des esters au bitume est compris entre 10:90 et 50:50.
- Le liant bitumineux est mis en oeuvre en une quantité comprise entre 2 et 15 parties pondérales pour 100 parties pondérales de granulats.
- Le liant bitumineux est mis en oeuvre en une quantité d'environ 5 parties pondérales pour 100 parties pondérales de granulats.

L'invention a également pour objet un enrobé bitumineux propre à être répandu à froid, tel qu'on peut l'obtenir par le procédé défini ci-dessus, comprenant des granulats dont chaque particule est recouverte d'un enrobage de liant bitumineux, le liant étant constitué par du bitume dissous dans un solvant à base d'au moins un monoester d'acide gras propre à se transformer chimiquement au contact de l'air avec augmentation de viscosité.

Les caractéristiques et avantages de l'invention seront exposés plus en détail dans la description donnée ci-après de quelques exemples.

Tous les exemples décrits utilisent en tant qu'ester l'ester méthylique de tournesol et l'ester méthylique de lin, c'est-à-dire les produits de transestérification de l'huile de tournesol et de l'huile de lin respectivement par le méthanol.

### Exemple 1

On a réalisé différents mélanges d'ester méthylique d'huile de tournesol avec d'une part un bitume dur naturel de la classe des asphaltites, d'autre part un bitume dur de désasphaltage.

Ces mélanges se situent typiquement dans les proportions suivantes:
- bitume dur 50 à 90 %
- ester 10 à 50 %.

Les caractéristiques de consistance initiales (pénétrabilité, température de ramollissement bille et anneau) mesurées selon NF T66-008 permettent de situer ces mélanges dans la classe de bitume de la norme XP T65-001 ainsi que dans d'autres classes non normalisées.

Les exemples suivants décrivent la réalisation d'un enrobage d'une composition de granulats minéraux de répartition granulométrique convenable par de l'ester méthylique d'huile végétale et par une poudre de bitume dur. Après un malaxage suffisamment long pour obtenir un noircissement général du mélange, on est alors en présence d'un enrobé bitumineux réalisé à froid.

L'enrobé reste maniable suffisamment longtemps pour pouvoir être mis en oeuvre dans un délai assez long après sa fabrication.

On a utilisé dans les exemples 2 à 5 des granulats ayant la composition pondérale suivante, dont tous les constituants proviennent de la carrière Logis-Neuf dans la Drôme et sont de la classe BIIIa:
- 4/6 lavé 40 %
- 0/4 concassé 30 %
- 0/4 roulé 30 %

Les bitumes utilisés sont les mêmes que dans l'exemple 1.

### Exemple 2

L'enrobé a la composition pondérale suivante:
- Granulats 100 %
- Ester de tournesol 1,25 %
- Bitume dur de désasphaltage 3,75 %

### Exemple 3

L'enrobé a la composition pondérale suivante:
- Granulats 100 %
- Ester de tournesol 1,5 %
- Bitume dur naturel 3,5 %

Il peut être préférable d'accélérer la montée en consistance du mélange bitumineux en introduisant des catalyseurs de siccativation favorisant la réaction de réticulation entre les chaînes carbonées insaturées qui constituent l'ester. L'oxygène de l'air intervient dans cette réaction.

Cette variante est illustrée par les exemples 4 et 5.

### Exemple 4

L'enrobé a la composition pondérale suivante:
- Granulats 100 %
- Ester de tournesol 1,25 %
- Bitume dur de désasphaltage 3,75 %
- Catalyseurs de siccativation 0,15 %

Lors du malaxage avec les granulats, l'oxygène de l'air est adsorbé par l'ester de telle manière que la siccativation se poursuit dans le temps au sein de l'enrobé mis en oeuvre sans qu'il y ait d'échange gazeux avec la surface.

Le choix de l'ester est aussi déterminant pour la vitesse de siccativation. Certaines huiles sont particulièrement siccatives. Leurs esters présentent donc une réactivité plus ou moins marquée. Ces huiles peuvent être issues du lin ou du bois de chine. Des mélanges d'ester d'huile semi-siccatives (tournesol) et d'esters d'huiles siccatives (lin, bois de chine) sont aussi avantageusement utilisés.

D'autre part il est parfois intéressant d'introduire des dopes d'adhésivité (association d'alcoylamidopolyamine et d'alcoylimidazopolyamine) afin d'améliorer le contact de l'ester avec les granulats même si ceux-ci sont mouillés. Les quantités ajoutées sont de l'ordre de 0,3 % par rapport à l'ester.

### Exemple 5

L'enrobé a la composition pondérale suivante:
- Granulats 100 %
- Bitume dur de désasphaltage 3,75 %
- Ester de tournesol 0,55 %
- Ester de lin 0,70 %
- Catalyseurs de siccativation 0,146 %
- Dope d'adhésivité 0,004 %

## Revendications

1. Procédé pour préparer à froid un enrobé propre à être répandu à froid, comprenant des granulats dont chaque particule est recouverte d'un enrobage de liant bitumineux, caractérisé en ce qu'on malaxe ensemble les granulats, un solvant à base d'au moins un monoester d'acide gras propre à se transformer chimiquement au contact de l'air avec augmentation de viscosité, et un bitume dur en poudre, le bitume se dissolvant dans le solvant pour former ledit enrobage.

2. Procédé selon la revendication 1, dans lequel le solvant est constitué exclusivement par un ou plusieurs monoesters d'acides gras.

3. Procédé selon l'une des revendications précédentes, dans lequel le solvant comprend au moins un monoester d'un acide gras et d'un alcool comportant au plus 4 atomes de carbone.

4. Procédé selon l'une des revendications précédentes, dans lequel le solvant comprend au moins un monoester méthylique d'acide gras.

5. Procédé selon l'une des revendications précédentes, dans lequel le solvant comprend un mélange de monoesters d'acides gras obtenu par transestérification d'une huile animale ou végétale.

6. Procédé selon l'une des revendications précédentes, dans lequel ledit ou lesdits monoesters, ou ladite huile, possèdent un indice d'iode supérieur ou égal à 120.

7. Procédé selon l'une des revendications précédentes, dans lequel le solvant contient en outre au moins un catalyseur de la polymérisation du monoester sous l'action de l'oxygène.

8. Procédé selon l'une des revendications précédentes, dans lequel le bitume dur est choisi parmi un bitume naturel du type asphaltite et un bitume de désasphaltage.

9. Procédé selon l'une des revendications précédentes, dans lequel le rapport pondéral des esters au bitume est compris entre 10:90 et 50:50.

10. Procédé selon l'une des revendications précédentes, dans lequel le liant bitumineux est mis en oeuvre en une quantité comprise entre 2 et 15 parties pondérales pour 100 parties pondérales de granulats.

11. Procédé selon la revendication 10, dans lequel le liant bitumineux est mis en oeuvre en une quantité d'environ 5 parties pondérales pour 100 parties pondérales de granulats.

12. Enrobé bitumineux propre à être répandu à froid, tel qu'on peut l'obtenir par le procédé selon l'une des revendications précédentes, comprenant des granulats dont chaque particule est recouverte d'un enrobage de liant bitumineux, le liant étant constitué par du bitume dissous dans un solvant à base d'au moins un monoester d'acide gras propre à se transformer chimiquement au contact de l'air avec augmentation de viscosité.
